# EUROPÄISCHE PATENTSCHRIFT

(11) **EP 2 308 624 B1**
(45) Veröffentlichungstag und Bekanntmachung des Hinweises auf die Patenterteilung: **19.09.2018**
(21) Anmeldenummer: 10466025.3
(22) Anmeldetag: 06.10.2010
(51) Int. Cl.: B23D 15/00, B23D 35/00

(54) **Anlage zur Blechtrennung**
Device for separating sheet metal
Installation destinée à la séparation de tôles

(30) Priorität: 08.10.2009 CZ 20090663
(43) Veröffentlichungstag der Anmeldung: 13.04.2011
(73) Patentinhaber: Skoda Auto A.S., 293 60 Mladá Boleslav (CZ)
(72) Erfinder: Prokop, Vit, 46343 Cesky Dub (CZ); Bures, Petr, 29301 Mlada Boleslav (CZ)

(56) Entgegenhaltungen:
- EP-A2- 1 889 679
- JP-U- 63 053 614
- JP-U- 64 034 114

## Beschreibung

### Technisches Gebiet

Vorliegende Erfindung betrifft eine Anlage zur Trennung von Rollenblechen im Pressprozess auf Aufschnittlinien. Eine Anlage gemäß dem Oberbegriff des Anspruchs 1, ist aus EP 1 889 679 bekannt.

### Bisheriger Stand der Technik

Derzeit sind bei den Anlagen zur Trennung von Rollenblechen im Pressprozess auf Aufschnittlinien zwei Grundmethoden der Trennung entsprechend dem verwendeten Schnittwerkzeug bekannt.

Bei Verwendung von Linearschere mit der Möglichkeit der Rotation der Scherenachse können rechtwinkelige oder trapezförmige Tafeln geschnitten werden. Ähnliche Anlage ist z.B. in JP 56139821 und JP 2000246534 abgebildet.

Bei Einsatz eines Profil-Schnittwerkzeuges kann eine spezifische Aufschnittform für jeweils ein oder mehrere Teile (Tafel) erreicht werden. Hier handelt es sich um eine achsabgestimmte Form im Sinne der Verschiebung von Blech und Werkzeug. Der Einsatz einer Schere mit Profil-Schnittform ist z.B. in JP 60263609 zu sehen.

Der Nachteil beider Anlagentypen besteht darin, dass sie die möglichst beste Nutzung des Vormaterials - Blechs, das der Blechtrennanlage in Rollen zugebracht, und gleichzeitig die Reduzierung der Notwendigkeit die Schnittwerkzeuge herzustellen, nicht ermöglichen. Zurzeit besteht in den meisten Fällen nicht die Anforderung an den Zuschnitt von rechtwinkligen Formen, sondern von Radienformen der Tafeln.

### Darstellung der Erfindung

Vorliegende Erfindung betrifft eine Anlage zur Trennung von Rollenblechen mit den Merkmalen des Anspruchs 1. Die Darstellung der Erfindung liegt in der Verwendung eines Schnittwerkzeuges mit einer Radiuswirkform (R2000-3000mm) und in der Vorschubmöglichkeit der Kassette mit Schnittwerkzeug auf der schwenkbaren Grundplatte in beide Richtungen quer gegenüber der Längsachse des Blechbandes.

Durch den Quervorschub des Schnittwerkzeuges kann die gleiche Stellung des Radienmessers über dem Materialband wie bei seiner Verschwenkung erzielt werden. Zugleich können durch den Quervorschub der Kassette mit dem Schnittwerkzeug die Grenzlagen der schwenkbaren Grundplatte erweitert werden.

Die heutigen zur Herstellung von Blech-Formteilen z.B. in der Automobilindustrie eingesetzten Aufschnittlinien schneiden Hunderttausende bis Millionen gleiche Tafeln in der Form von Lineartrapezen. Es ist offensichtlich, dass durch den Einsatz der Erfindung bedeutende Materialeinsparungen erzielt werden.

### Übersicht der Figuren der Zeichnungen

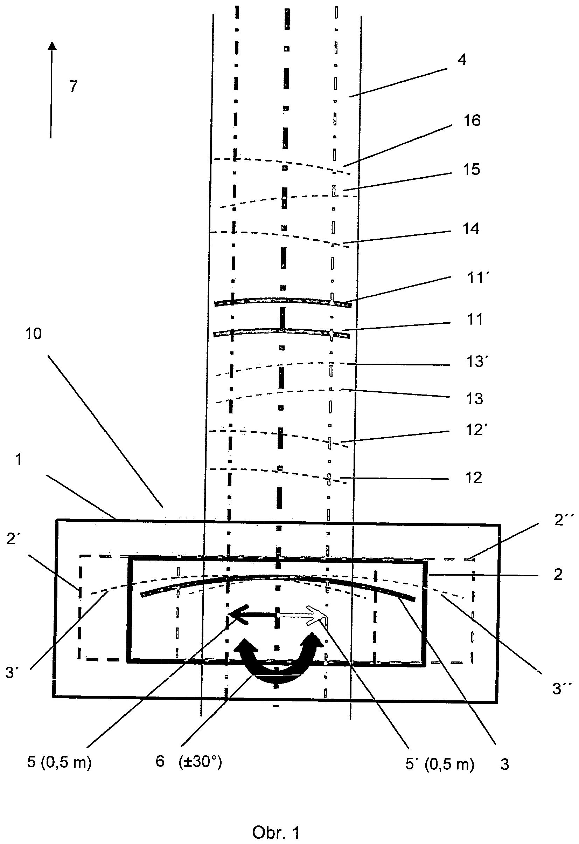

Die Erfindung wird mittels Fig. 1 näher erläutert, die das kinematische Schema der Anlage zur Blechtrennung mit zwei Freiheitsgraden gegenüber dem sich bewegenden Blechband darstellt.

### Ausführungsbeispiele

Vorliegende Erfindung betrifft die Anlage 10 zur Trennung von Rollenblechen 4 im Pressprozess auf Aufschnittlinien. Die Darstellung liegt in der drehbaren Grundplatte 1 und der an ihr verschiebbaren Kassette 2 mit Schnittwerkzeug 3 mit Radiuswirkform. Die Anlage 10 ermöglicht das Blech 4 auf Tafeln in der Form von Radientrapezen zu schneiden.

Die Fig. 1 stellt das kinematische Schema der Anlage 10 zur Blechtrennung 4 mit zwei Freiheitsgraden gegenüber dem sich bewegenden Blechband 4 dar. Die Kassette 2 mit dem Schnittwerkzeug 3 ist verschiebbar an der schwenkbaren Grundplatte 1 befestigt. Die Kassette 2 mit dem Schnittwerkzeug 3 ist in beide Richtungen 5, 5' verschwenkbar, und zwar quer gegenüber der Längsachse des Blechbandes 4. Der Radius der Wirkform des Schnittwerkzeuges 3 liegt zwischen R2000-R3000 mm. Die Grundplatte 1 mit der quer verschiebbaren Kassette 2 ist weiter um ±30° verschwenkbar, siehe 6. Die Kassette 2 mit dem Schnittwerkzeug 3 ist um 0,5 Meter auf jede Seite verschiebbar, siehe die Position der Kassette 2' und 2", bzw. die Position des Schnittwerkzeuges 3', 3".

Die Trennung von Rollenblech 4 erfolgt so, dass nach der Blechrollenabwicklung 4 und der Blechausrichtung dieses Blech 4 durchlaufend in die Anlage 10 zur Blechtrennung 4 in der Durchlaufrichtung 7 des Bleches 4 hineingeschoben wird. Die Blechtrennung 4 erfolgt in Takten, wo zuerst die Schrittlänge des Blechvorschubs 4 und der Quervorschub der Kassette 2 mit Schnittwerkzeug 3 eingestellt wird. Die schwenkbare Grundplatte 1, auf der verschiebbar die Kassette 2 mit Schnittwerkzeug 3 befestigt ist, kann eventuell um gewünschten Winkel im Bereich ±30° verschwenkt werden. Nachfolgend erfolgt die Blechtrennung mit dem Schnittwerkzeug 3. Der Schneidprozess setzt sinngemäß bis zum Aufbrauch der Blechrolle fort.

Die Schneidkurven haben verschiedene Formen, z.B. 11, 11', 12, 12', 13, 13', 14, 15, 17, in Abhängigkeit von der Verschwenkung der Grundplatte 1 und der Verschiebung der Kassette 2 mit Schnittwerkzeug 3.

### Industrielle Nutzbarkeit

Die erfindungsgemäße Anlage dient zur Trennung von Rollenblechen auf das resultierende Bogentrapez im Pressprozess auf Aufschnittlinien.

## Patentansprüche

1. Eine Anlage (10) zur Rollenblechtrennung (4) bestehend aus einer Grundplatte (1) und Kassette (2) mit Schnittwerkzeug (3), wobei der Radius der Wirkform des Schnittwerkzeuges (3) im Bereich R2000-R3000 mm liegt, **dadurch gekennzeichnet, dass** die Grundplatte (1) als drehbare Grundplatte (1) ausgebildet ist, wobei die Kassette (2) verschiebbar an der drehbaren Grundplatte (1) befestigt ist, wobei die Kassette (2) mit Schnittwerkzeug (3) zu beiden Seiten (5, 5') quer gegenüber der Längsachse des Blechbandes (4) verschiebbar ist.

2. Die Anlage (10) zur Blechtrennung (4) gemäß Anspruch 1, **dadurch gekennzeichnet, dass** die Grundplatte (1) mit der quer verschiebbaren Kassette (2) um ±30° verschwenkbar ist (6).

3. Die Anlage (10) zur Blechtrennung (4) gemäß Anspruch 1, **dadurch gekennzeichnet, dass** die Kassette (2) mit Schnittwerkzeug (3) um 0,5 Meter in jede Seite (5, 5') quer gegenüber der Längsachse des Blechbandes (4) verschiebbar ist.

## Claims

1. A system (10) for separating sheet metal rolls (4) consisting of a base plate (1) and cassette (2) with cutting tool (3), wherein the radius of the effective form of the cutting tool (3) is in the range of R2000-R3000 mm, **characterized in that** the base plate (1) is designed as a rotatable base plate (1), wherein the cassette (2) is mounted displaceably on the rotatable base plate (1), wherein the cassette (2) with cutting tool (3) is displaceable on both sides (5, 5') transversely in respect to the longitudinal axis of the sheet metal band (4).

2. The system (10) for the sheet metal separation (4) according to Claim 1, **characterized in that** the base plate (1) is pivotable (6) with the transversely displaceable cassette (2) by ±30°.

3. The system (10) for the sheet metal separation (4) according to Claim 1, **characterized in that** the cassette (2) with cutting tool (3) is displaceable by 0.5 meters on each side (5, 5) transversely in respect to the longitudinal axis of the sheet metal band (4).

## Revendications

1. Installation (10) destinée à la séparation de tôles en rouleaux (4), composée d'une plaque de base (1) et d'une cassette (2) avec outil de coupe (3), le rayon de la forme active de l'outil de coupe (3) se situant dans la plage de R2000-R3000, **caractérisée en ce que** la plaque de base (1) est constituée en tant que plaque de base (1) rotative, la cassette (2) étant fixée de façon coulissante sur la plaque de base (1) rotative, la cassette (2) avec outil de coupe (3) pouvant coulisser des deux côtés (5, 5') transversalement par rapport à l'axe longitudinal de la bande de tôle (4).

2. Installation (10) destinée à la séparation de tôles (4) selon la revendication 1, **caractérisée en ce que** la plaque de base (1), avec la cassette (2) pouvant coulisser transversalement, peut pivoter de ± 30° (6).

3. Installation (10) destinée à la séparation de tôles (4) selon la revendication 1, **caractérisée en ce que** la cassette (2) avec outil de coupe (3) peut coulisser de 0,5 mètre de chaque côté (5, 5') transversalement à l'axe longitudinal de la bande de tôle (4).
